# EUROPEAN PATENT APPLICATION

(11) **EP 1 852 444 A1**
(43) Date of publication of application: **07.11.2007**
(21) Application number: 06713388.4
(22) Date of filing: 09.02.2006
(51) Int. Cl.: C08F 6/00, C09D 7/12, C09D 157/00

(54) **METHOD FOR PRODUCING POLYMER, COATING COMPOSITION AND COATED ARTICLE**

(30) Priority: 10.02.2005 JP 2005034102
(71) Applicant: Asahi Glass Company, Limited, Chiyoda-ku, Tokyo 100-8405 (JP)
(72) Inventor: ATAKU, Masakazu, chihara-shi Chiba, 2908566 (JP); KIMURA, Isao, chihara-shi Chiba, 2908566 (JP); MORI, Keisuke, chihara-shi Chiba, 2908566 (JP)
(74) Representative: Müller-Boré & Partner Patentanwälte
(86) International application number: PCT/JP2006/302245
(87) International publication number: WO 2006/085577

(57) **Abstract**

To provide a process for producing a polymer, whereby a less colored polymer can be obtained without reducing vinyl monomers by a side reaction, a less colored coating composition, and a coated article having a less colored coating film.

A polymer is used which is obtained by a process for producing a polymer, which comprises a step of polymerizing a vinyl monomer mixture containing a quinone compound to obtain a polymer, and a step of adding an oxidizing agent or a reducing agent to a liquid containing the polymer.

## Description

### TECHNICAL FIELD

The present invention relates to process for producing a polymer, a coating composition and a coated article.

### BACKGROUND ART

To a vinyl monomer such as (meth)acrylic acid, a quinone compound such as p-methoxyphenol or p-hydroxyphenol is added as a radical polymerization inhibitor in order to increase the storage stability of the vinyl monomer. However, if a quinone compound is contained in a vinyl monomer, there is a problem that the vinyl monomer, its polymer and an article employing such a polymer, are likely to be colored.

The following methods have been proposed as methods to reduce the quinone compound contained in the vinyl monomer or its polymer.
(1) A method wherein a methacrylate containing a quinone compound is treated with a sulfite to remove the quinone compound in the form of an organic sulfonate (Patent Document 1).
(2) A method wherein a monomer essentially containing (meth)acrylic acid (salt) is polymerized by using a persulfate and hydrogen sulfite in the presence of a water-soluble metal salt at a temperature of not higher than 50°C (Patent Document 2).

However, by the method (1), the quinone compound as a radical polymerization inhibitor is reduced, whereby there will be a problem that the storage stability of the methacrylate will be substantially lowered.

By the method (2), a side reaction will take place wherein hydrogen sulfite is added to the (meth)acrylic acid (salt), whereby the (meth)acrylic acid (salt) will decrease, and there will be a problem that a polymer and an article employing it having a desired performance can not be obtained, and further, there will be a problem that a by-product having hydrogen sulfite added to the (meth)acrylic acid (salt) will present an adverse effect to the quality of the polymer or the product employing it.
Patent Document 1: JP-A-7-278053
Patent Document 2: JP-A-2004-10713

### DISCLOSURE OF THE INVENTION

### OBJECT TO BE ACCOMPLISHED BY THE INVENTION

It is an object of the present invention to provide a process for producing a polymer, whereby a less colored polymer can be obtained without reducing vinyl monomers by a side reaction, a less colored coating composition, and a coated article having a less colored coating film.

### MEANS TO ACCOMPLISH THE OBJECT

The present inventors have found that the substance causing the coloration is a substance formed by oligomerization of a quinone compound such as p-methoxyphenol or p-hydroxyphenol contained as a radical polymerization inhibitor in the vinyl monomer. Further, the present inventors have found it possible to suppress the coloration by controlling the oligomerization of the quinone compound by decomposing the quinone compound by adding an oxidizing agent to the polymer obtained by polymerizing vinyl monomers or by adding a reducing agent thereto, and have finally accomplished the present invention.

Thus, the present invention provides the following:
(1) A process for producing a polymer, which comprises a step of polymerizing a vinyl monomer mixture containing a quinone compound to obtain a polymer, and a step of adding an oxidizing agent to a liquid containing the polymer.
(2) A process for producing a polymer, which comprises a step of polymerizing a vinyl monomer mixture containing a quinone compound to obtain a polymer, and a step of adding a reducing agent to a liquid containing the polymer.
(3) The process for producing a polymer according to the above (1), wherein at the time of adding the oxidizing agent, a basic compound is also added.
(4) The process for producing a polymer according to the above (1), (2) or (3), wherein the vinyl monomer mixture contains an alkyl (meth)acrylate having a C₄₋₂₂ alkyl group.
(5) The process for producing a polymer according to the above (3), wherein the basic compound is sodium hydroxide, potassium carbonate or ammonia.
(6) The process for producing a polymer according to the above (1) or any one of the above (3) to (5), wherein the oxidizing agent is hydrogen peroxide.
(7) The process for producing a polymer according to any one of the above (1) to (6), wherein the vinyl monomer mixture comprises the following monomer (A), vinyl monomer (B) and vinyl monomer (C):
   Monomer (A): a compound represented by the following formula (1): 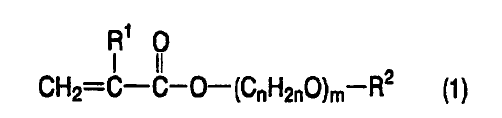 wherein R¹ is a hydrogen atom or a methyl group, R² is a C₁₋₅ alkyl group or a phenyl group, n is an integer of from 1 to 3, and m is an integer of from 2 to 25;
   Vinyl monomer (B): a compound having a structure represented by the following formula (2) which has a carbonyl group bonded to two carbon atoms, provided that at least one hydrogen atom is bonded to at least one carbon atom; 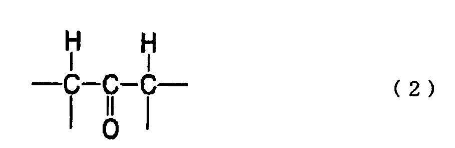 and
      Vinyl monomer (C): a compound having a structure represented by the following formula (3) which has a hydroxyl group bonded to a carbon atom to which two hydrogen atoms are bonded. 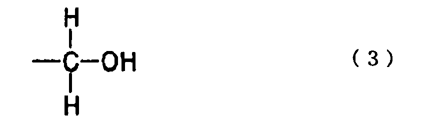
(8) A coating composition containing a polymer obtained by the process for producing a polymer as defined in any one of the above (1) to (7).
(9) A coated article having a coating film made of the coating composition as defined in the above (8).

### EFFECTS OF THE INVENTION

According to the process for producing a polymer of the present invention, a less colored polymer can be obtained without reducing the vinyl monomers by a side reaction. Accordingly, the coating composition of the present invention will be a less colored one. Further, the coated article of the present invention will be one having a less colored coating film.

### BEST MODE FOR CARRYING OUT THE INVENTION

### PROCESS FOR PRODUCING POLYMER

The process for producing a polymer of the present invention is a process which comprises a step (hereinafter referred to as the polymerization step) of polymerizing a vinyl monomer mixture to obtain a polymer, and a step (hereinafter referred to as the addition step) of adding an oxidizing agent or a reducing agent to a solution containing the polymer.

### POLYMERIZATION STEP

The vinyl monomer may, for example, be (meth)acrylic acid, a (meth)acrylate such as an alkyl (meth)acrylate, acrylonitrile, acrylamide or styrene. In the present invention, "(meth)acrylic acid" means acrylic acid or methacrylic acid, and "(meth)acrylate" means an acrylate or a methacrylate.

The vinyl monomer usually contains a quinone compound. The quinone compound may, for example, be p-methoxyphenol or p-hydroxyphenol.

The polymerization method for the vinyl monomer mixture may be a known polymerization method such as a solution polymerization method, an emulsion polymerization method, a suspension polymerization method or a bulk polymerization method.

The polymerization of the vinyl monomer mixture is preferably carried out in the absence of hydrogen sulfite. By carrying the polymerization of the vinyl monomer mixture in the absence of hydrogen sulfite, a by-product can be suppressed, and it is possible to obtain a polymer having the desired performance.

### ADDITION STEP

The solution containing the polymer may, for example, be a polymer solution obtained after the solution polymerization, an emulsion obtained after the emulsion polymerization or a suspension obtained after the suspension polymerization.

The oxidizing agent to be added to the liquid containing the polymer may be any oxidizing agent so long as it is capable of oxidizing and decomposing the quinone compound, and it may, for example, be hydrogen peroxide, sodium hypochlorite, manganese dioxide, nitric acid, potassium permanganate or copper chloride. Among these oxidizing agents, hydrogen peroxide is preferred from the viewpoint of the ability to oxidize and decompose the quinone compound, the safety of a by-product formed by the decomposition, the influence over the quality of the polymer and the coating composition, the availability, the economical efficiency, etc.

The amount of the oxidizing agent to be added, is preferably from 0.05 to 4 parts by mass, more preferably from 0.1 to 2 parts by mass, per 100 parts by mass of the polymer. When the amount of the oxidizing agent is at least 0.05 part by mass, oxidation and decomposition of the quinone compound can sufficiently be proceeded. When the amount of the oxidizing agent is at most 4 parts by mass, it is possible to suppress the influence, etc. of the remaining oxidizing agent over the polymer and the coating composition, and such is also economically advantageous.

At the time of adding the oxidizing agent, it is preferred to further add a basic compound, whereby the decomposition of the oxidizing agent is accelerated, and at the same time, the oxidation and decomposition of the quinone compound will further be accelerated. Further, the pH of the liquid containing the polymer is preferably from 8 to 13. In the present invention, the pH can be measured by means of a glass electrode type pH meter.

The basic compound may, for example, be sodium hydroxide, potassium carbonate, ammonia, potassium hydroxide, calcium hydroxide, barium hydroxide, aluminum hydroxide or sodium hydrogencarbonate. Among such basic compounds, sodium hydroxide, potassium carbonate or ammonia is preferred from the viewpoint of the availability and the handling efficiency. The basic compound may be added during the addition step in order to control the pH of the liquid containing the polymer during the addition step.

Further, the reducing agent to be added to the liquid containing the polymer may be any reducing agent so long as it has a reducing power against the quinone compound, and it may, for example, be sodium thiosulfate, sodium sulfite, hydrogen sulfide, ammonia or a derivative thereof.

Among such reducing agents, sodium thiosulfate is preferred from the viewpoint of the ability to suppress the oligomerization of the quinone compound, the safety, the handling efficiency, the availability, the economical efficiency, etc.

The amount of the reducing agent is preferably from 0.1 to 1 part by mass, more preferably from 0.2 to 0.5 part by mass, per 100 parts by mass of the polymer. By adjusting the amount of the reducing agent to be at least 0.1 part by mass, coloration of the polymer and the coating composition can sufficiently be suppressed. When the amount of the reducing agent to be added is made to be not more than 1 part by mass, such being economically advantageous.

In the addition step, the temperature of the liquid containing the polymer is preferably from 0 to 100°C, more preferably from 25 to 60°C. When the temperature is at least 0°C, the coloration of the polymer can sufficiently be suppressed. When the temperature is at most 100°C, the influence over the polymer and the coating composition can be suppressed, and the safety in the addition step can be improved.

### OTHER STEPS

The process for producing a polymer of the present invention may have other steps, as the case requires, in addition to the above-described polymerization step and addition step. Such other steps are different depending upon the polymerization method selected for obtaining the polymer. For example, in the case of a solution polymerization method, a step of distilling off the organic solvent may, for example, be mentioned. In the case of an emulsion polymerization method, a step of coagulating the polymer, and a step of separating the coagulate of the polymer may, for example, be mentioned. In the case of a suspension polymerization, a step of separating the polymer may, for example, be mentioned.

Such other steps are carried out subsequent to the above-described addition step. Other steps may be carried out immediately after adding the oxidizing agent or the reducing agent to the liquid containing the polymer, or may be carried out after letting the liquid to stand for a while after adding the oxidizing agent or the reducing agent to the liquid containing the polymer.

The temperature of the liquid containing the polymer in such other steps is preferably from 0 to 100°C, more preferably from 25 to 60°C. When the temperature is at least 0°C, the coloration of the polymer can be sufficiently be suppressed. When the temperature is at most 100°C, the influence over the polymer and the coating composition can be suppressed, and the safety in such other steps will be improved.

### PREFERRED SPECIFIC EMBODIMENTS

The process for producing a polymer of the present invention is particularly excellent in the effects to suppress coloration of a polymer obtainable by polymerizing a vinyl monomer mixture containing a (meth)acrylate. Now, as an example of such a polymer, a self-crosslinkable polymer for a coating composition will be described.

The self-crosslinkable polymer is a polymer obtainable by polymerizing a vinyl monomer mixture which comprises a monomer (A) represented by the following formula (1), a vinyl monomer (B) having a structure represented by the following formula (2) which has a carbonyl group bonded to two carbon atoms (provided that at least one hydrogen atom is bonded to at least one carbon atom), and a vinyl monomer (C) having a structure represented by the following formula (3) which has a hydroxyl group bonded to a carbon atom to which two hydrogen atoms are bonded.

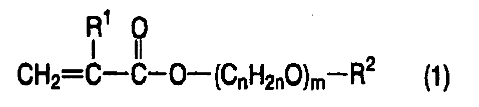

In the above formula (1), R¹ is a hydrogen atom or a methyl group, R² is a C₁₋₅ alkyl group or a phenyl group, n is an integer of from 1 to 3, and m is an integer of from 2 to 25.

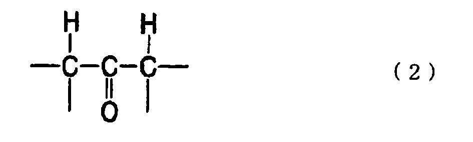

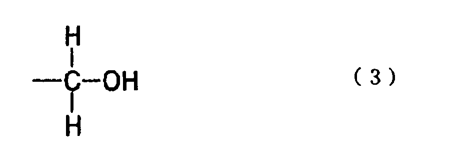

In the above polymer, "the carbonyl group bonded to two carbon atoms, provided that at least one hydrogen atom is bonded to at least one carbon atom" of the vinyl monomer (B) and "the hydroxyl group bonded to a carbon atom to which two hydrogen atoms are bonded" of the vinyl monomer (C) undergo a dehydration reaction as shown by the following formula (4), whereby self-crosslinking takes place.

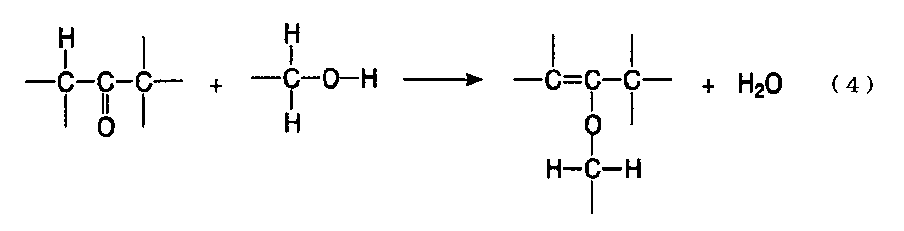

The monomer (A) is a component to make the self-crosslinkable polymer to be liquid. Further, units based on the monomer (A) in the self-crosslinkable polymer will play a role as a catalyst for the crosslinking reaction of the unsaturated double bond formed by the dehydration reaction of the above formula (4).

The monomer (A) may, for example, be methoxytetraethylene glycol mono(meth)acrylate, ethoxytetraethylene glycol mono(meth)acrylate, propoxytetraethylene glycol mono(meth)acrylate, n-butoxytetraethylene glycol mono(meth)acrylate, n-pentoxytetraethylene glycol mono(meth)acrylate, methoxytetrapropylene glycol mono(meth)acrylate, ethoxytetrapropylene glycol mono(meth)acrylate, propoxytetrapropylene glycol mono(meth)acrylate, n-butoxytetrapropylene glycol mono(meth)acrylate, n-pentoxytetrapropylene glycol mono(meth)acrylate, methoxypolyethylene glycol mono(meth)acrylate, ethoxypolyethylene glycol mono(meth)acrylate, phenoxytetraethylene glycol mono(meth)acrylate, phenoxyhexaethylene glycol mono(meth)acrylate, phenoxypolyethylene glycol mono(meth)acrylate, or phenoxytetrapropylene glycol mono (meth) acrylate. Among these monomers, a monomer having a polyoxyalkylene chain wherein repeating units of an oxyalkylene group (m in (CₙH₂ₙO)ₘ- in the formula (1)) are from 2 to 25, preferably from 5 to 22, is preferred, since it is thereby possible to effectively lower the viscosity of the self-crosslinkable polymer.

The amount of the monomer (A) is from 5 to 95 mass%, preferably from 10 to 90 mass%, in the vinyl monomer mixture (100 mass%). When the amount of the monomer (A) is at least 5 mass%, the viscosity of the self-crosslinkable polymer will be sufficiently low. When the amount of the monomer (A) is at most 95 mass%, a coating film having a high hardness can be obtained.

The vinyl monomer (B) may, for example, be a (meth)acryloyl alkylketone compound such as 4-(meth)acryloyl-2-butanone, 3-(meth)acryloyl-2-butanone, 1-(meth)acryloyl-2-butanone, 5-(meth)acryloyl-2-pentanone, 4-(meth)acryloyl-4-methyl-2-pentanone, methacryloyldiacetylmethane, diethylmethane, diethyl acryloyl malonate or acryloylacetylacetone; a vinyl alkylketone compound such as vinyl methyl ketone, vinyl ethyl ketone, vinyl isobutyl ketone, hydroxymethyl vinyl ketone, t-butyl vinyl ketone, neopentyl vinyl ketone, α-chlorovinyl methyl ketone or mesityl oxide; 2-(acetoacetoxy)ethyl (meth)acrylate, diacetone acrylamide (another name: N-(1,1-dimethyl-3-oxobutyl)acrylamide), or benzalacetone. In the present invention, "(meth)acryloyl" means acryloyl or methacryloyl.

The amount of the vinyl monomer (B) is from 0.001 to 90 mass%, preferably from 10 to 90 mass%, in the vinyl monomer mixture (100 mass%). When the amount of the vinyl monomer (B) is at least 0.001 mass%, the affinity to water will be good. When the amount of the vinyl monomer (B) is at most 90 mass%, a coating film having a high crosslinking degree can be obtained.

The vinyl monomer (C) may, for example, be ethylene glycol mono(meth)acrylate, 4-hydroxybutyl (meth)acrylate, 3-hydroxypropyl (meth)acrylate, tetraethylene glycol mono(meth)acrylate, tetrapropylene glycol mono(meth)acrylate, polyethylene glycol mono(meth)acrylate, N-(hydroxymethyl)acrylamide, N-(hydroxyethyl)acrylamide (another name: N-methylolacrylamide), allyl alcohol, 4-hydroxy-1-butene, 4-hydroxymethylstyrene, 4-(2-hydroxyethyl)styrene, 1,4-dihydroxy-2-butene or glycerol monomethacrylate.

The amount of the vinyl monomer (C) is from 0.001 to 90 mass%, preferably from 10 to 90 mass%, in the vinyl monomer mixture (100 mass%). When the amount of the vinyl monomer (C) is at least 0.001 mass%, a coating film having high water resistance can be obtained. When the amount of the vinyl monomer (C) is at most 90 mass%, a coating film having high hardness can be obtained.

The vinyl monomer mixture may contain other vinyl monomer (D) in addition to the monomer (A), the vinyl monomer (B) and the vinyl monomer (C), depending upon the particular purpose such as improvement of water resistance, hardness, etc. of the coating film or lowering of the viscosity of the self-crosslinkable polymer.

In order to lower the viscosity of the self-crosslinkable polymer, it is preferred to incorporate, as such other vinyl monomer (D), an alkyl (meth)acrylate having a C₄₋₂₂ alkyl group.

Such an alkyl (meth)acrylate may, for example, be 2-ethylhexyl (meth)acrylate, butyl (meth)acrylate, pentyl (meth)acrylate, heptyl (meth)acrylate, hexyl (meth)acrylate, octyl (meth)acrylate, nonyl (meth)acrylate, decyl (meth)acrylate, undecyl (meth)acrylate, dodecyl (meth)acrylate, tridecyl (meth)acrylate, tetradecyl (meth)acrylate, pentadecyl (meth)acrylate, hexadecyl (meth)acrylate, heptadecyl (meth)acrylate, octadecyl (meth)acrylate, nonadecyl (meth)acrylate, eicosyl (meth)acrylate, eneicosyl (meth)acrylate or docosyl (meth)acrylate.

The number of carbon atoms in the alkyl group is from 4 to 22, preferably from 8 to 20. When the number of carbon atoms is at least 4, it is possible to sufficiently lower the viscosity of the self-crosslinkable polymer. When the number of carbon atoms is at most 22, the degree of polymerization will be sufficiently high, and it is possible to suppress crystallization, whereby it is possible to suppress the viscosity of the self-crosslinkable polymer to a low level.

Further, other vinyl monomer (D) to improve the water resistance, hardness, etc. of the coating film, may, for example, be an aromatic monomer such as styrene or vinyltoluene; an alkyl (meth)acrylate having at most 3 carbon atoms, such as methyl methacrylate or ethyl methacrylate; a monomer having a carboxyl group such as maleic acid, fumaric acid, itaconic acid, citraconic acid, an alkyl or alkenyl monoester thereof, phthalic acid β-(meth)acryloxyethyl monoester, isophthalic acid β-(meth)acryloxyethyl monoester, terephthalic acid β-(meth)acryloxyethyl monoester, succinic acid β-(meth)acryloxyethyl monoester, acrylic acid, methacrylic acid, crotonic acid or cinnamic acid; ethylene, vinyl chloride, vinyl acetate, vinylpyrrolidone, vinyl carbazole, acrylonitrile butadiene, propylene, isoprene, vinylpyridine or butyl vinyl ether.

Such other vinyl monomer (D) is from 0 to 40 mass%, preferably from 0 to 30 mass%, in the vinyl monomer mixture (100 mass%). When the amount of other vinyl monomer (D) is at most 40 mass%, a coating film having a high crosslinking degree can be obtained.

The number average molecular weight of the self-crosslinkable polymer is preferably from 500 to 50,000, more preferably from 700 to 20,000. When the number average molecular weight of the self-crosslinkable polymer is at least 500, the self-crosslinkable polymer can easily be isolated from the liquid containing the polymer, and it is possible to obtain a coating film excellent in mechanical properties such as flexibility, the solvent resistance, the boiling water resistance, etc. When the number average molecular weight of the self-crosslinkable polymer is at most 50,000, it is possible to suppress the viscosity of the self-crosslinkable polymer to be low.

The self-crosslinkable polymer can be obtained by polymerizing the vinyl monomer mixture by a known polymerization method such as a solution polymerization method, an emulsion polymerization method or a suspension polymerization method. As the polymerization method, a solution polymerization method is preferred wherein the vinyl monomer mixture is polymerized in an organic solvent in the presence of a radical polymerization initiator. The polymerization may be carried out by charging the radical polymerization initiator and the vinyl monomer mixture to the organic solvent all at once, or it may be carried out by dropwise adding the radical polymerization initiator and the vinyl monomer mixture to the organic solvent.

The radical polymerization initiator may, for example, be an organic peroxide such as benzoyl peroxide, t-butyl peroxide, cumene hydroperoxide or lauroyl peroxide; an azo compound such as 2,2'-azobisisobutyronitrile or azobiscyclohexanenitrile; or a persulfate initiator such as potassium persulfate or ammonium persulfate.

The organic solvent may, for example, be ethyl acetate, toluene, xylene, benzene, dioxane, tetrahydrofuran, methyl cellosolve acetate, dimethylformamide, dimethylacetamide, dimethylsulfoxide, sulfolane, n-butanol, methyl cellosolve, ethyl cellosolve, butyl cellosolve, diacetone alcohol, ethylene glycol, isopropyl alcohol, n-butanol or methanol. In order to increase the storage stability of the self-crosslinkable polymer, water may be incorporated to the organic solvent.

After distilling off the organic solvent from the self-crosslinkable polymer solution obtained by he solution polymerization method, water may be added to the self-crosslinkable polymer to obtain an aqueous solution of the self-crosslinkable polymer. The oxidizing agent or the reducing agent is added before distilling of the organic solvent from the self-crosslinkable polymer solution.

### COATING COMPOSITION

The coating composition of the present invention is a coating composition containing a polymer obtained by the process for producing a polymer of the present invention.

The coating composition of the present invention may contain functional additives as the case requires. The functional additives may, for example, be an organic solvent, water, a pigment, a dye, other resins, a plasticizer, a reactive monomer, an ultraviolet absorber, a leveling agent, an anti-cissing agent, an anti-skinning agent, a pigment dispersant, a surface adjusting agent, an anti-sagging agent, a defoaming agent, a film-forming assistant, a photostabilizer, a thickener, a surfactant, an antiseptic, a fungicide, an anti-algae agent, an anti-sedimentation agent, an anti-fouling agent, an anti-color separation agent, a coupling agent, a wax, an anti-static agent, a flame retardant, and an antioxidant.

In a case where the above self-crosslinkable polymer is used as the polymer, the coating composition of the present invention is useful as a coating composition to prevent rain-streaked contamination of outdoor buildings, etc. (hereinafter referred to as the low contamination coating composition).

The low contamination coating composition may further contain other resins, a curing agent, a dehydration catalyst, a polymerization initiator, etc.

Such other resins may, for example, be a fluororesin, an acrylic resin, a silicone-modified acrylic resin, a urethane resin, a melamine resin, a silicone resin, an epoxy resin and a polyester resin. Such other resins may be used alone or in combination as a mixture of two or more of them. Among such resins, a fluororesin is particularly preferred which is excellent in weather resistance and chemical resistance. Such other resins may be in any form such as a solvent form, an aqueous form or a powder form.

The fluororesin may be a polymer of a fluoromonomer or a copolymer of a fluoropolymer with a monomer other than a fluoromonomer. The fluoromonomer may, for example, be a fluoroolefin or a monomer having a polyfluoroalkyl group. Such fluoromonomers may be used alone or in combination as a mixture of two or more of them.

The curing agent will react with the self-crosslinkable polymer to form a cured coating film. The curing agent may, for example, be an amino resin, a polyisocyanate compound, a compound having at least two hydrazino groups, a carbodiimide compound, a compound having at least two epoxy groups, a compound having at least two oxazoline residual groups, a compound having at least two aziridine groups, a polyvalent metal, a compound having at least two amino groups, a polyketimine, a compound having at least two carboxyl groups, an acid anhydride, or a compound having at least two mercapto groups. Such curing agents may be used alone or in combination as a mixture of two or more of them.

The dehydration catalyst will accelerate the crosslinking reaction of the self-crosslinkable polymer. Such a dehydration catalyst may, for example, be an acidic catalyst, a basic catalyst, an inorganic salt catalyst or an organic salt catalyst.

The acidic catalyst may, for example, be an inorganic acid such as hydrochloric acid, hydrobromic acid, hydroiodic acid, hydrofluoric acid, sulfuric acid, phosphoric acid, boric acid or borofluoride; an organic acid such as acetic acid, propionic acid, benzoic acid, trifluoroacetic acid or p-toluenesulfonic acid; an acidic organic compound such as phenol; a polymer compound having an acidic group such as a polyacrylic acid or a polystyrenesulfonic acid; or a Lewis acid. The Lewis acid may, for example, be a complex with an organic substance, such as an onium salt or a pyriminium salt. By using a combination of a Lewis acid and a photosensitizer, crosslinking can be carried out by irradiation with ultraviolet rays or visible light.

The basic catalyst may, for example, be an amine compound such as pyridine, pyrrolidine, piperidine or triethylamine; a metal hydroxide such as sodium hydroxide, potassium hydroxide, barium hydroxide or calcium hydroxide; a metal alcoholate such as sodium methoxide, potassium methoxide, lithium ethylate or potassium t-butoxide; a carbonate such as sodium carbonate or potassium carbonate; a Grignard reagent; or a metal chelate compound.

The inorganic salt catalyst may, for example, be a sulfate, a phosphate, a borate or a hydrochloride.

The organic salt catalyst may, for example, be a salt obtainable by a neutralization reaction of a carboxyl group with an alkaline compound, such as an acetate.

Instead of the dehydration catalyst, a dehydration agent such as molecular sieve or anhydrous calcium chloride may be employed. Further, the dehydration catalyst and the dehydration agent may be used in combination.

The polymerization initiator accelerates the reaction of an unsaturated double bond formed by the dehydration reaction represented by the above formula (2). The polymerization initiator may, for example, be a cationic polymerization initiator or a radical polymerization initiator.

The cationic polymerization initiator may, for example, be sulfuric acid, phosphoric acid, trifluoroacetic acid, aluminum chloride, titanium tetrachloride, tin tetrachloride, iodine or boron trifluoride.

The radical polymerization initiator may, for example, be cumene hydroperoxide, t-butylhydroperoxide, dicumyl peroxide, di-t-butyl peroxide, benzoyl peroxide, lauroyl peroxide, dibenzoyl peroxide, hydrogen peroxide, 2,2'-azobisisobutyronitrile, ammonium persulfate, potassium persulfate, sodium persulfate, a metal peroxide, a hyponitrite, or a metal chelate compound. The cationic polymerization initiator and the radical polymerization initiator may be used in combination.

### COATED ARTICLE

The coated article of the present invention is an article having a coating film made of the coating composition of the present invention.

The coated article of the present invention can be obtained by applying the coating composition of the present invention to a substrate to form a coating film made of the coating composition on the substrate surface.

The coating method may, for example, be a coating by means of a brush or roller brush, an air spray coating, a coating by means of a curtain flow coater, or a coating by means of a roll coater.

The coating film is formed by drying and curing the coating composition applied. The drying may be carried out with or without heating. The heating temperature is preferably not higher than the heat resistant temperature of the substrate, more preferably at most 250°C.

The substrate may, for example, be an inorganic substrate such as concrete, natural stone or glass, a metal substrate such as iron, stainless steel, aluminum, copper, bronze or titanium; or an organic-inorganic composite material such as a fiber-reinforced resin (FRP), a resin-reinforced concrete, or a fiber-reinforced concrete. The substrate may be one having another coating film preliminarily formed by another coating composition.

The coated article of the present invention may, for example, be an automobile, an electric train, an airplane, a bridge component, a steel tower, a tank, a pipe, an exterior panel of a building, a door, a window material, a gate door, other building components, a center divider, a guardrail, other road components, communication equipments or electric or electronic components.

### EXAMPLES

Now, the present invention will be described with reference to Examples and Comparative Examples, but the present invention is by no means restricted by the following Examples. In the Examples, "parts" and "%" are based on mass unless otherwise specified.

Abbreviations of compounds used in Examples are shown in Table 1.

**TABLE 1**

| Abbreviations | Names of compounds |
|---|---|
| N-MAA | N-methylolacrylamide |
| DAAM | Diacetone acrylamide |
| AAEMA | 2-(Acetoacetoxy)ethyl methacrylate |
| PME350 | Methoxypolyethylene glycol monomethacrylate (tradename PME-350, manufactured by NOF Corporation) |
| PEM400 | Methoxy polyethyelen glycol monomethacrylate (tradename PME-400, manufactured by NOF Corporation) |
| GLM | Glycerol monomethacrylate (containing from 100 to 500 ppm of a quinone compound) |
| DSH | Dedecanethiol |
| AIBN | 2,2'-Azobisisobutyronitrile |
| H₂O₂ | Hydrogen peroxide |
| NaClO | Sodium hypochlorite |
| Na₂S₂O₃ | Sodium thiosulfate |
| Na₂SO₃ | Sodium sulfite |
| NaOH | Sodium hydroxide |
| ADH | Azipic acid dihydrazide |
| HW-100 | Self-emulsifiable polyisocyanate (tradename: Basonat HW-100, manufactured by BASF) |

### PRODUCTION OF POLYMERS

### EXAMPLE 1

Into an autoclave having an internal capacity of 2L and equipped with a stirrer, 1,200 g of methanol, 60 g of N-MAA, 35 g of AAEMA, 20 g of PME400, 185 g of GLM, 9.7 g of chain transfer agent DSH and 2.4 g of radical polymerization initiator AIBN were charged and polymerized at 60°C for 18 hours in a nitrogen atmosphere with stirring to obtain a solution of polymer 1 having a solid content of 20%.

After the polymerization, the solution of polymer 1 was cooled to 20°C, and 120 g of a 5% chlorine aqueous solution of NaClO (0.4 part of NaClO per 100 parts of polymer 1) and 45 g of a 1N aqueous solution of NaOH were added to the solution of polymer 1. After adjusting the pH to 12, methanol was immediately distilled off from the solution of polymer 1 at 50°C over a period of 120 minutes by means of a rotary evaporator. To the obtained polymer 1, 450 g of deionized water was added to obtain an aqueous polymer solution 1.

### EXAMPLE 2

After obtaining the solution of polymer 1 in the same manner as in Example 1, the solution of polymer 1 was cooled to 20°C. After adding 40 g of a 10% aqueous solution of Na₂SO₃ (0.25 part of Na₂SO₃ per 100 parts of polymer 1) to the solution of polymer 1, methanol was immediately distilled off from the solution of polymer 1 at 50°C over a period of 120 minutes by means of a rotary evaporator. To the obtained polymer 1, 450 g of deionized water was added to obtain an aqueous polymer solution 2.

### EXAMPLE 3

After obtaining the solution of polymer 1 in the same manner as in Example 1, methanol was distilled from the solution of polymer 1 at 50°C over a period of 120 minutes by means of a rotary evaporator. To the obtained polymer 1, 450 g of deionized water was added to obtain an aqueous polymer solution 3.

### EXAMPLE 4

Into an autoclave having an internal capacity of 2L and equipped with a stirrer, 1,200 g of methanol, 45 g of N-MAA, 45 g of DAAM, 15 g of PME400, 195 g of GLM, 9.7 g of chain transfer agent DSH and 2.4 g of radical polymerization initiator AIBN were charged and polymerized at 60°C for 20 hours in a nitrogen atmosphere with stirring to obtain a solution of polymer 2 having a solid content of 20%. After the polymerization, the solution of polymer 2 was cooled to 20°C. To the solution of polymer 2, 45 g of a 35% aqueous solution of H₂O₂ (1 part of H₂O₂ per 100 parts of polymer 2) and 9 g of a 1N aqueous solution of NaOH were added, and after adjusting the pH to 12, methanol was immediately distilled off from the solution of polymer 2 at 50°C over a period of 120 minutes by means of a rotary evaporator. To the obtained polymer 2, 450 g of deionized water was added to obtain an aqueous polymer solution 4.

### EXAMPLE 5

After obtaining the solution of polymer 2 in the same manner as in Example 4, the solution of polymer 2 was cooled to 20°C. To the solution of polymer 2, 30 g of a 5% chlorine aqueous solution of NaClO (0.1 part of NaClO per 100 parts of polymer 2) and 45 g of a 1N aqueous solution of NaOH were added, and after adjusting the pH to 12, methanol was immediately distilled off from the solution of polymer 2 at 50°C over a period of 120 minutes by means of a rotary evaporator. To the obtained polymer 2, 450 g of deionized water was added to obtain an aqueous polymer solution 5.

### EXAMPLE 6

After obtaining the solution of polymer 2 in the same manner as in Example 4, methanol was distilled off from the solution of polymer 2 at 50°C over a period of 120 minutes by means of a rotary evaporator. To the obtained polymer 2, 450 g of deionized water was added to obtain an aqueous polymer solution 6.

### EXAMPLE 7

Into an autoclave having an internal capacity of 2L and equipped with a stirrer, 1,200 g of methanol, 50 g of N-MAA, 45 g of DAAM, 125 g of PME350, 80 g of GLM, 9.7 g of chain transfer agent DSH and 2.4 g of radical polymerization initiator AIBN were charged and polymerized at 60°C for 20 hours in a nitrogen atmosphere with stirring to obtain a solution of polymer 3 having a solid content of 20%. After the polymerization, the solution of polymer 3 was cooled to 20°C. To the solution of polymer 3, 40 g of a 35% aqueous solution of H₂O₂ (0.9 part of H₂O₂ per 100 parts of polymer 3) and 9 g of a 1N aqueous solution of NaOH were added, and after adjusting the pH to 12, methanol was immediately distilled off from the solution of polymer 3 at 50°C over a period of 120 minutes by means of a rotary evaporator. To the obtained polymer 3, 450 g of deionized water was added to obtain an aqueous polymer solution 7.

### EXAMPLE 8

After obtaining the solution of polymer 3 in the same manner as in Example 7, the solution of polymer 3 was cooled to 20°C. To the solution of polymer 3, 25 g of 10% aqueous solution of Na₂SO₃ (0.15 part of Na₂SO₃ per 100 parts of polymer 3) was added, and then, methanol was immediately distilled off from the solution of polymer 3 at 50°C over a period of 120 minutes by means of a rotary evaporator. To the obtained polymer 3, 450 g of deionized water was added to obtain an aqueous polymer solution 8.

### EXAMPLE 9

After obtaining the solution of polymer 3 in the same manner as in Example 7, methanol was distilled off from the solution of polymer 3 at 50°C over a period of 120 minutes by means of a rotary evaporator. To the obtained polymer 3, 450 g of deionized water was added to obtain an aqueous polymer solution 9.

### EXAMPLE 10

Into an autoclave having an internal capacity of 2L and equipped with a stirrer, 1,200 g of methanol, 30 g of DAAM, 145 g of PME400, 225 g of GLM, 9.7 g of chain transfer agent DSH and 2.4 g of radical polymerization initiator AIBN were charged and polymerized at 60°C for 20 hours in a nitrogen atmosphere with stirring to obtain a solution of polymer 4 having a solid content of 20%. After the polymerization, the solution of polymer 4 was cooled to 20°C. To the solution of polymer 4, 45 g of a 35% aqueous solution of H₂O₂ (1 part of H₂O₂ per 100 parts of polymer 4) and 9 g of a 1N aqueous solution of NaOH were added. After adjusting the pH to 12, methanol was immediately distilled off from the solution of polymer 4 at 50°C for 120 minutes by means of a rotary evaporator. To the obtained polymer 4, 450 g of deionized water was added to obtain an aqueous polymer solution 10.

### EXAMPLE 11

After obtaining the solution of polymer 4 in the same manner as in Example 10, the solution of polymer 4 was cooled to 20°C. To the solution of polymer 4, 30 g of 10% aqueous solution of Na₂SO₃ (0.2 part of Na₂SO₃ per 100 parts of polymer 4) was added, and then, methanol was immediately distilled off from the solution of polymer 4 at 50°C for 120 minutes by means of a rotary evaporator. To the obtained polymer 4, 450 g of deionized water was added to obtain an aqueous polymer solution 11.

### EXAMPLE 12

After obtaining the solution of polymer 4 in the same manner as in Example 10, methanol was distilled off from the solution of polymer 4 at 50°C over a period of 120 minutes by means of a rotary evaporator. To the obtained polymer 4, 450 g of deionized water was added to obtain an aqueous polymer solution 12.

### EXAMPLE 13

Into an autoclave having an internal capacity of 2L and equipped with a stirrer, 1,200 g of methanol, 40 g of DAAM, 150 g of PME350, 110 g of GLM, 9.7 g of chain transfer agent DSH and 2.4 g of radical polymerization initiator AIBN were charged and polymerized at 60°C for 20 hours in a nitrogen atmosphere with stirring to obtain a solution of polymer 5 having a solid content of 20%. After the polymerization, the solution of polymer 5 was cooled to 20°C. To the solution of polymer 5, 35 g of a 5% chlorine aqueous solution of NaClO (0.1 part of NaClO per 100 parts of the polymer) and 45 g of a 1N aqueous solution of NaOH were added, and after adjusting the pH to 12, methanol was immediately distilled off from the solution of polymer 5 at 50°C over a period of 120 minutes by means of a rotary evaporator. To the obtained polymer 5, 450 g of deionized water was added to obtain an aqueous polymer solution 13.

### EXAMPLE 14

After obtaining the solution of polymer 5 in the same manner as in Example 13, the solution of polymer 5 was cooled to 20°C. To the solution of polymer 5, 35 g of a 10% aqueous solution of Na₂S₂O₃ (0.2 part of Na₂S₂O₃ per 100 parts of polymer 5) was added, and then, methanol was distilled off from the solution of polymer 5 at 50°C over a period of 120 minutes by means of a rotary evaporator. To the obtained polymer 5, 450 g of deionized water was added to obtain an aqueous polymer solution 14.

### EXAMPLE 15

After obtaining the solution of polymer 5 in the same manner as in Example 13, methanol was distilled off from the solution of polymer 5 at 50°C over a period of 120 minutes by means of a rotary evaporator. To the obtained polymer 5, 450 g of deionized water was added to obtain an aqueous polymer solution 15.

### EVALUATION OF COLORATION OF POLYMERS

In accordance with JIS K7105 "Method for Testing Optical Properties of Plastics" 6.3.5 Method for calculating yellowing degrees, YI values were measured with respect to the aqueous polymer solutions 1 to 15. Specifically, a sample of each aqueous polymer solution was stored in an oven of 50°C for 24 hours, whereupon the aqueous polymer solution was diluted twice with deionized water, and filtered through a polyethylene terephthalate filter of 0.5 µm. Then, the YI value was measured by means of SM Color Computer SM-3 (manufactured by Suga Test Instruments Co., Ltd.). The results are shown in Table 2. Comparative Examples are Ex. 3, 6, 9, 12 and 15.

**TABLE 2**

| | Ex. 1 | Ex. 2 | Ex. 3 |
|---|---|---|---|
| YI value | 6.33 | 7.64 | 10.20 |
| | Ex. 4 | Ex. 5 | Ex. 6 |
| YI value | 5.50 | 6.21 | 10.11 |
| | Ex. 7 | Ex. 8 | Ex. 9 |
| YI value | 0.62 | 7.54 | 10.36 |
| | Ex. 10 | Ex. 11 | Ex. 12 |
| YI value | 5.98 | 7.75 | 10.12 |
| | Ex. 13 | Ex. 14 | Ex. 15 |
| YI value | 6.67 | 7.42 | 10.21 |

### PREPARATION OF BASE COATING MATERIALS

### PREPARATION EXAMPLE 1

### Base White Coating Material 1:

Into a stainless steel autoclave (internal capacity 200 mL) equipped with a stirrer, 105.3 g of deionized water, 2.0 g of a nonionic emulsifier (N-2310, manufactured by Nippon Nyukazai Co., Ltd. (hereinafter referred to as N-2310), 0.2 g of sodium dodecylsulfate, 0.07 g of a 25% aqueous solution of ammonium persulfate, 0.22 g of potassium carbonate, 0.02 g of sodium hydrogensulfite, 21.2 g of ethyl vinyl ether, 21.0 g of cyclohexyl vinyl ether, 3.4 g of CH₂=CHOCH₂-X-CH₂OH (wherein X is a 1,4-cyclohexylene group) and 8.2 g of CH₂=CHOCH₂-X-CH₂O(C₂H₄O)ₖH (wherein X is a 1,4-cyclohexylene group, and k is about 15 as an average value) were charged and cooled with ice, and nitrogen gas was supplied to a pressure of 0.35 MPa and then purged to 0.1 MPa.

After repeating the pressurizing and purging in a total of two times, the remaining air was removed by deaeration to 1.3×10⁴ Pa by means of a vacuum pump, and then, 56.7 g of chlorotrifluoroethylene was charged, followed by a polymerization reaction at 30°C for 12 hours to obtain an aqueous dispersion 1 of fluororesin 1. The average particle size of the fluororesin in the aqueous dispersion 1 was 140 nm, and the solid content concentration was 50%. The average particle size was measured by means of a light scattering particle size measuring apparatus ELS-8000 (manufactured by OTSUKA ELECTRONICS CO., LTD.).

71 Parts of the aqueous dispersion 1, 3.6 parts of a film forming assistant Cs-12 (manufactured by CHISSO CORPORATION), 0.3 part of thickener RHEOVIS CR (manufactured by Höchst Gosei), 15.4 parts of titanium oxide CR-97 (manufactured by Ishihara Sangyo Kaisha Ltd.), 0.8 part of a pigment dispersant Nopcosparce 44-C (manufactured by San Nopco Limited), 0.6 part of defoamer FS Antifoam 90 (manufactured by Dow Corning) and 10.3 parts of deionized water were mixed to obtain a base white coating material 1. The concentration of the fluororesin 1 in the base white coating material 1 was 34.8%.

### PREPARATION EXAMPLE 2

### Base White Coating Material 2:

89 Parts of acrylsilicon emulsion SUNMALL EW-102 (manufactured by Sanyokasei Co., Ltd.), 3.6 parts of film-forming assistant Cs-12 (manufactured by CHISSO CORPORATION), 0.3 part of thickener RHEOVIS CR (manufactured by Höchst Gosei), 15.4 parts of titanium oxide CR-97 (manufactured by Ishihara Sangyo Kaisha, Limited), 0.8 part of pigment dispersant Nopcosparce 44-C (manufactured by San Nopco Limited), 0.6 part of defoamer FS Antifoam 90 (manufactured by Dow Corning) and 10.3 part of deionized water were mixed to obtain a base white coating material 2. The concentration of the fluororesin 1 in the base white coating material 2 was 34.8%.

### PREPARATION EXAMPLE 3

### Base White Coating Material 3:

81 Parts of polyurethane emulsion U-coat UX-2505 (manufactured by Sanyokasei Co., Ltd.), 3.6 parts of film-forming assistant Cs-12 (manufactured by CHISSO CORPORATION), 0.3 part of thickener RHEOVIS CR (manufactured by Höchst Gosei), 15.4 parts of titanium oxide CR-97 (manufactured by Ishihara Sangyo Kaisha, Limited), 0.8 part of pigment dispersant Nopcosparce 44-C (manufactured by San Nopco Limited), 0.6 part of defoamer FS Antifoam 90 (manufactured by Dow Corning) and 10.3 parts of deionized water were mixed to obtain a base white coating material 3. The concentration of the fluororesin 1 in the base white coating material 3 was 34.8%.

### EVALUATION OF COATING COMPOSITIONS

### EXAMPLES 16 to 36

Aqueous coating compositions were obtained by mixing polymers 1 to 15, curing agents and base white coating materials 1 to 3 in the proportions shown in Table 3 to 6. The pH was adjusted to 7.0 with ammonia or hydrochloric acid.

On an aluminum plate having a size of 200 mm × 95 mm × 8 mm, an aqueous coating composition was applied by means of an applicator so that the dried film thickness would be 20 µm and aged at 23°C for 2 weeks to obtain a coated plate. The results of evaluation of the aqueous coating compositions and the coated plates are shown in Tables 3 to 6. Comparative Examples are Ex. 30 to 36. Evaluation items shown in the following Tables were measured in accordance with the following methods.
(1) Gloss
In accordance with JIS Z8741, the specular gloss at 60° of each coated plate was measured. The larger the numerical value, the better the gloss.
(2) Color difference
A curing agent was added to a base white coating material, and L*, a* and b** were measured. Further, a polymer was added, and L*, a* and b* were measured. The coating film color difference ΔE as between the coating material having no polymer added and the coating material having the polymer added was obtained.
L*, a* and b* were measured in accordance with JIS Z8730 by means of SG2000 (manufactured by Nippon Denshoku Kogyo). The smaller the color difference ΔE, the less the coloration of the aqueous coating composition.
(3) Water resistance
An aqueous coating composition was applied to a slate coated with an epoxy primer and then immersed in deionized water, whereby water resistance was tested in accordance with the liquid resistance of JIS K5600-6-1. The coated state and the adhesion after water resistance were tested, whereby a case where no abnormality was observed, was identified by ○, a case where slight blister was observed, was identified by Δ, and a case where blister and peeling were observed, was identified by ×.
(4) Slope contamination resistance
A coated plate (size: 200 mm in length × 95 mm in width × 8 mm in thickness) was bent along the center portion (100 mm) of the longitudinal direction, and exposed outdoors in Kawasaki-city of Kanagawa prefecture so that the upper portion had an angle of 30° to the horizontal plane, and the lower portion was perpendicular, and the coated side located outside. Upon expiration of 6 months from the initiation of the exposure, the L* value of the upper portion (30° slope) of this coated plate was measured. The difference ΔL* in the L* value as between before and after the test was calculated and represented by an absolute value. The L* value was measured in accordance with JIS Z8730 by means of SQ2000 (manufactured by Nippon Denshoku Kogyo). The smaller the ΔL*, the better the slope contamination resistance.
(5) Rain streaked contamination resistance
With respect to the outdoor exposed plate after carrying out the evaluation of (4), the rain streaked contamination of the lower portion (vertical surface) was evaluated. A case where the rain streaked contamination was not distinct was identified by ○, a case where the rain streaked contamination was slightly observed, was identified by Δ, and a case where the rain streaked contamination was distinct, was identified by ×.
(6) Accelerated weather resistance
The gloss retention after 5,000 hours of the accelerated weather resistance test by Xenon Lamp Method as disclosed in JIS K5600-7-7, was measured. A case wherein the gloss retention was at least 80%, was identified by ○, and a case where the gloss retention was less than 80, was identified by ×.

**TABLE 3**

| Examples | Ex. 16 | Ex. 17 | Ex. 18 | Ex. 19 | Ex. 20 | Ex. 21 |
|---|---|---|---|---|---|---|
| Base white coating material No. | 1 | 1 | 1 | 1 | 1 | 1 |
| (Blended parts) | 287 | 287 | 287 | 287 | 287 | 287 |
| Aqueous polymer solution No. | 1 | 2 | 4 | 5 | 10 | 11 |
| (Blended parts) | 25 | 25 | 25 | 25 | 25 | 25 |
| Curing agent | HW-100 | HW-100 | HW-100 | ADH | ADH | ADH |
| (Blended parts) | 6.5 | 6.5 | 6.5 | 2.5 | 2.5 | 2.5 |

| Evaluation results | | | | | | |
|---|---|---|---|---|---|---|
| Drying conditions | 23°C for 2 weeks | 23°C for 2 weeks | 23°C for 2 weeks | 23°C for 2 weeks | 23°C for 2 weeks | 23°C for 2 weeks |
| Gloss | 76 | 75 | 78 | 79 | 78 | 77 |
| Color difference | 0.5 | 0.6 | 0.3 | 0.4 | 0.4 | 0.5 |
| Water resistance | ○ | ○ | ○ | ○ | ○ | ○ |
| Slope contamination resistance (6 months) | 7 | 8 | 6 | 7 | 10 | 8 |
| Rain streaked contamination resistance (6 months) | ○ | ○ | ○ | ○ | ○ | ○ |
| Accelerated weather resistance | ○ | ○ | ○ | ○ | ○ | ○ |

**TABLE 4**

| Examples | Ex. 22 | Ex. 23 | Ex. 24 | Ex. 25 |
|---|---|---|---|---|
| Base white coating material No. | 2 | 2 | 2 | 2 |
| (Blended parts) | 287 | 287 | 287 | 287 |
| Aqueous polymer solution No. | 7 | 8 | 10 | 11 |
| (Blended parts) | 25 | 25 | 25 | 25 |
| Curing agent | ADH | ADH | ADH | ADH |
| (Blended parts) | 2.5 | 2.5 | 2.5 | 2.5 |

| Evaluation results | | | | |
|---|---|---|---|---|
| Drying conditions | 23°C for 2 weeks | 23°C for 2 weeks | 23°C for 2 weeks | 23°C for 2 weeks |
| Gloss | 82 | 84 | 81 | 83 |
| Color difference | 0.6 | 0.3 | 0.2 | 0.4 |
| Water resistance | ○ | ○ | ○ | ○ |
| Slope contamination resistance (6 months) | 8 | 9 | 10 | 8 |
| Rain streaked contamination resistance (6 months) | ○ | ○ | ○ | ○ |
| Accelerated weather resistance | × | × | × | × |

**TABLE 5**

| Examples | Ex. 26 | Ex. 27 | Ex. 28 | Ex. 29 |
|---|---|---|---|---|
| Base white coating material No. | 3 | 3 | 3 | 3 |
| (Blended parts) | 287 | 287 | 287 | 287 |
| Aqueous polymer solution No. | 4 | 5 | 13 | 14 |
| (Blended parts) | 25 | 25 | 25 | 25 |
| Curing agent | ADH | ADH | HW-100 | HW-100 |
| (Blended parts) | 2.5 | 2.5 | 6.5 | 6.5 |

| Evaluation results | | | | |
|---|---|---|---|---|
| Drying conditions | 23°C for 2 weeks | 23°C for 2 weeks | 23°C for 2 weeks | 23°C for 2 weeks |
| Gloss | 84 | 82 | 81 | 80 |
| Color difference | 0.5 | 0.4 | 0.6 | 0.4 |
| Water resistance | ○ | ○ | ○ | ○ |
| Slope contamination resistance (6 months) | 7 | 7 | 9 | 8 |
| Rain streaked contamination resistance (6 months) | ○ | ○ | ○ | ○ |
| Accelerated weather resistance | × | × | × | × |

**TABLE 6**

| Comparative Examples | Ex. 30 | Ex. 31 | Ex. 32 | Ex. 33 | Ex. 34 | Ex. 35 | Ex. 36 |
|---|---|---|---|---|---|---|---|
| Base white coating material No. | 1 | 1 | 1 | 2 | 2 | 3 | 3 |
| (Blended parts) | 287 | 287 | 287 | 287 | 287 | 287 | 287 |
| Aqueous polymer solution No. | 3 | 6 | 9 | 9 | 12 | 6 | 15 |
| (Blended parts) | 10 | 10 | 10 | 10 | 10 | 10 | 10 |
| Curing agent | ADH | ADH | ADH | ADH | ADH | ADH | HW-100 |
| (Blended parts) | 2.5 | 2.5 | 2.5 | 2.5 | 2.5 | 2.5 | 6.5 |

| Evaluation results | | | | | | | |
|---|---|---|---|---|---|---|---|
| Drying conditions | 23°C for 2 weeks | 23°C for 2 weeks | 23°C for 2 weeks | 23°C for 2 weeks | 23°C for 2 weeks | 23°C for 2 weeks | 23°C for 2 weeks |
| Gloss | 76 | 77 | 77 | 81 | 83 | 80 | 83 |
| Color difference | 1.5 | 1.6 | 1.6 | 1.8 | 2.0 | 1.5 | 1.7 |
| Water resistance | ○ | ○ | ○ | ○ | ○ | ○ | ○ |
| Slope contamination resistance (6 months) | 6 | 10 | 6 | 7 | 7 | 9 | 8 |
| Rain streaked contamination resistance (6 months) | ○ | ○ | ○ | ○ | ○ | ○ | ○ |
| Accelerated weather resistance | ○ | ○ | ○ | × | × | × | X |

### INDUSTRIAL APPLICABILITY

The polymer obtained by the process for producing a polymer of the present invention has coloration suppressed and thus is particularly useful as a resin for coating material.

The entire disclosure of Japanese Patent Application No. 2005-34102 filed on February 10, 2005 including specification, claims and summary is incorporated herein by reference in its entirety.

## Claims

1. A process for producing a polymer, which comprises a step of polymerizing a vinyl monomer mixture containing a quinone compound to obtain a polymer, and a step of adding an oxidizing agent to a liquid containing the polymer.

2. A process for producing a polymer, which comprises a step of polymerizing a vinyl monomer mixture containing a quinone compound to obtain a polymer, and a step of adding a reducing agent to a liquid containing the polymer.

3. The process for producing a polymer according to Claim 1, wherein at the time of adding the oxidizing agent, a basic compound is also added.

4. The process for producing a polymer according to Claim 1, 2 or 3, wherein the vinyl monomer mixture contains an alkyl (meth)acrylate having a C₄₋₂₂ alkyl group.

5. The process for producing a polymer according to Claim 3, wherein the basic compound is sodium hydroxide, potassium carbonate or ammonia.

6. The process for producing a polymer according to Claim 1 or any one of Claims 3 to 5, wherein the oxidizing agent is hydrogen peroxide.

7. The process for producing a polymer according to any one of Claims 1 to 6, wherein the vinyl monomer mixture comprises the following monomer (A), vinyl monomer (B) and vinyl monomer (C):
Monomer (A): a compound represented by the following formula (1) : 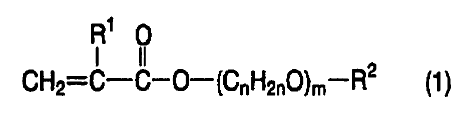 wherein R¹ is a hydrogen atom or a methyl group, R² is a C₁₋₅ alkyl group or a phenyl group, n is an integer of from 1 to 3, and m is an integer of from 2 to 25;
Vinyl monomer (B): a compound having a structure represented by the following formula (2) which has a carbonyl group bonded to two carbon atoms, provided that at least one hydrogen atom is bonded to at least one carbon atom; 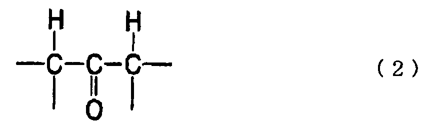 and
Vinyl monomer (C): a compound having a structure represented by the following formula (3) which has a hydroxyl group bonded to a carbon atom to which two hydrogen atoms are bonded.

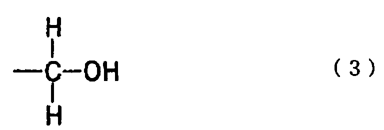

8. A coating composition containing a polymer obtained by the process for producing a polymer as defined in any one of Claims 1 to 7.

9. A coated article having a coating film made of the coating composition as defined in Claim 8.
